# EUROPÄISCHE PATENTSCHRIFT

(11) **EP 3 284 936 B1**
(45) Veröffentlichungstag und Bekanntmachung des Hinweises auf die Patenterteilung: **09.10.2019**
(21) Anmeldenummer: 17185257.7
(22) Anmeldetag: 08.08.2017
(51) Int. Cl.: F02D 41/14

(54) **VERFAHREN UND VORRICHTUNG ZUM BETREIBEN EINER LAMBDASONDEN-ANORDNUNG IN EINEM ABGASKANAL EINES VERBRENNUNGSMOTORS**
METHOD AND DEVICE FOR A LAMBDA SENSOR ARRANGEMENT OF AN EXHAUST CHANNEL OF AN INTERNAL COMBUSTION ENGINE
PROCÉDÉ ET DISPOSITIF PERMETTANT DE FAIRE FONCTIONNER UNE ARRANGEMENT DES SONDES LAMBDA DANS UN CONDUIT DE GAZ D'ÉCHAPPEMENT D'UN MOTEUR À COMBUSTION INTERNE

(30) Priorität: 17.08.2016 DE 102016115247
(43) Veröffentlichungstag der Anmeldung: 21.02.2018
(73) Patentinhaber: VOLKSWAGEN AKTIENGESELLSCHAFT, 38440 Wolfsburg (DE)
(72) Erfinder: Schemann, Stephan, 38440 Wolfsburg (DE); Sperling, Helmut, 38518 Gifhorn (DE); Schünke, Klemens, 17326 Brüssow (DE)
(74) Vertreter: Gulde & Partner

(56) Entgegenhaltungen:
- DE-A1-102013 223 429
- US-A1- 2007 271 904
- US-A1- 2010 300 068
- US-A1- 2014 156 172

## Beschreibung

Die Erfindung betrifft ein Verfahren zum Betreiben einer Lambdasonden-Anordnung an einem Abgaskanal eines Verbrennungsmotors.

Abgassensoren können zur Kontrolle und zur Regelung einer Vielzahl von Parametern eines Verbrennungsmotors genutzt werden. Ein typisches Beispiel für einen solchen Abgassensor ist eine Lambdasonde, welche zur Regelung des Verbrennungsluftverhältnisses des Verbrennungsmotors genutzt wird, um eine möglichst effiziente Abgasnachbehandlung durch einen Drei-Wege-Katalysator zu ermöglichen.

Bei einem Kaltstart oder in der Warmlaufphase des Verbrennungsmotors kann Feuchtigkeit abgasseitig in den Sondenkörper der Lambdasonde eindringen und sich dort niederschlagen. Dieses Wasser wird über mehrere Kaltstartvorgänge kumuliert, wenn eine bestimmte Schwellentemperatur im Kontaktbereich des Sondenkörpers der Lambdasonde mit der Sensorleitung nicht erreicht wird. Wenn sich hinreichend viel Wasser im Sondenkörper angesammelt hat, kann ein Kurzschluss über das Wasser entstehen, welcher zu einer Fehlfunktion der Lambdasonde führt. Durch den Kurzschluss kommt es zu einer erhöhten Sensorspannung, welche über die Diagnosefunktion des Steuergerätes erkannt wird und somit auf eine defekte Lambdasonde hindeutet. Da es sich hierbei meist um ein temporäres Fehlverhalten handelt, welches durch ein Ausbringen des Wassers aus dem Sondenkörper "geheilt" werden kann, kann ein Austausch der Lambdasonde vermieden werden, wenn nach gewissen Betriebsstunden eine Mindesttemperatur im Kontaktbereich zwischen Sondenkörper und Sensorleitung erreicht wird, bevor es zu einem Kurzschluss an der Lambdasonde kommt.

Aus der US 2014 0156172 A1 ist ein Verfahren bekannt, bei dem in Abhängigkeit von einem Taupunkt des Wasserdampfes im Abgaskanal die Leistung des Heizelements in einer Abgassonde angepasst wird, um einen Niederschlag von Wasser an der Spitze des Sensorelements der Lambdasonde zu kompensieren.

Aus der US 2010 0300068 A1 ist ein Verfahren bekannt, bei dem die Temperatur der Wand des Abgaskanals anhand der gemessenen Abgastemperatur, des Volumenstroms des Abgases und der Umgebungstemperatur abgeschätzt wird. Dabei wird der Taupunkt an der Wand des Abgaskanals anhand der Luftmasse und des Verbrennungsluftverhältnisses abgeschätzt und daraus die Menge an Kondenswasser abgeschätzt, welche sich an der Wand des Abgaskanals niederschlägt.

Die US 2007 0271904 A1 offenbart ein Verfahren zur Beheizung eines Abgassensors in der Abgasanlage eines Verbrennungsmotors, bei dem die Abgastemperatur durch eine Spätverstellung der Zündung angehoben wird, um eine Kondensation von Wasserdampf an dem Abgassensor zu vermeiden. Nachdem des Abgas auf ein definiertes Temperaturlevel aufgeheizt wurde, erfolgt ein elektrisches Beheizen des Abgassensors, wobei das elektrische Beheizen des Abgassensors gesperrt ist, solange die Abgastemperatur nicht einen bestimmten Schwellenwert überstiegen hat.

Aus der DE 10 2013 223 429 A1 ist ein Verfahren zur Erkennung einer Wasserdurchfahrt eines Kraftfahrzeuges mittels Abgassensoren bekannt, wobei bei Erkennen einer Wasserdurchfahrt Schutzmaßnahmen für die Abgasreinigungsanlage oder die Abgassensoren eingeleitet werden. Dabei ist vorgesehen, dass insbesondere eine starke Abkühlung des Abgasstrangs durch den Wasserkontakt bei der Wasserdurchfahrt erkannt wird.

Der Erfindung liegt nun die Aufgabe zugrunde, die Lambdasonde bei einem höheren Wassereintrag schneller aufzuheizen und ein höheres Temperaturniveau bei geringer Motorlast zu erreichen, um am Sondenkörper einen hinreichend großen Dampfdruck zu erzeugen, um das Wasser aus dem Sondenkörper auszutreiben und somit einen Kurzschluss und eine Fehlfunktion der Lambdasonde zu verhindern.

Die Aufgabe wird durch ein erfindungsgemäßes Verfahren zum Betreiben einer Lambdasonden-Anordnung an einem Abgaskanal eines Verbrennungsmotors gelöst, welches folgende Schritte umfasst:
- Ermitteln eines Wassereintrages in eine im Abgaskanal des Verbrennungsmotors angeordnete Lambdasonde
- Ermitteln der Wassermenge, welche von der Lambdasonde an das Abgas im Abgaskanal abgegeben wird,
- Bilanzierung der Wassermenge, welche in der Lambdasonde verbleibt, und
- Abgleich der in der Lambdasonde vorhandenen Wassermenge mit einem maximal zulässigen Schwellenwert, wobei bei einem Überschreiten des maximal zulässigen Schwellenwertes die Heizleistung für die Lambdasonde erhöht wird, um das Wasser aus der Lambdasonde auszutreiben.

Damit die Sonde schneller aufgeheizt und ein höheres Temperaturniveau bei niedriger Last erreicht wird, kann die Lambdasonde über die in der Lambdasonde vorhandene Heizung stärker beheizt werden, als es bei den gleichen Bedingungen und geringerem Wassereintrag geschehen würde. Da ein häufiges, starkes Heizen jedoch zu einer vorschnellen Alterung des Lambdasonde führen kann, liegt die erfindungsgemäße Lösung darin, den verstärkten Heizvorgang nur dann einzuleiten, wenn ein kritischer Schwellenwert für den Wassereintrag in den Sondenkörper der Lambdasonde überschritten ist, um dann die Lambdasonde zu "trocknen". Die Lambdasonden-Anordnung umfasst dabei mindestens eine im Abgaskanal angeordnete Lambdasonde sowie ein Steuergerät, über welches die Lambdasonde angesteuert werden kann.

Durch die in den abhängigen Ansprüchen aufgeführten Merkmale sind vorteilhafte Weiterentwicklungen und Verbesserungen des erfindungsgemäßen Verfahrens zum Betrieb der Lambdasonden-Anordnung möglich.

In bevorzugter Ausgestaltung der Erfindung ist vorgesehen, dass ein Wassermengenzähler vorgesehen ist, welcher den Wassereintrag in die Lambdasonde über mehrere Startvorgänge des Verbrennungsmotors aufsummiert, falls eine Schwellentemperatur zur Aktivierung des Wasseraustrags aus der Lambdasonde nicht erreicht wird. Da insbesondere ein häufiger Kurzstreckenverkehr mit vielen Kaltstartphasen zu einem kumuliert verstärkten Wassereintrag in die Lambdasonde führt, ist die Einrichtung eines Wassermengenzähler besonders vorteilhaft, um eine bedarfsgerechte Steuerung der Heizung der Lambdasonde zu ermöglichen.

In weiterer bevorzugter Ausgestaltung der Erfindung ist vorgesehen, dass die Startvorgänge in Abhängigkeit von einer ermittelten Umgebungstemperatur mit einem Gewichtungsfaktor multipliziert werden. Somit können Startvorgänge, bei denen ein höherer abgasseitiger Wassereintrag in die Lambdasonde erwartet wird, stärker gewichtet werden als Startvorgänge, bei denen voraussichtlich weniger Wasserdampf in den Sondenkörper der Lambdasonde eindringt. Dadurch kann die Wassermenge im Sondenkörper genauer abgeschätzt werden, sodass die Erhöhung der Heizleistung entsprechend eingeleitet werden kann.

In einer vorteilhaften Weiterbildung des Verfahrens ist vorgesehen, dass der Wassermengenzähler zurückgesetzt oder reduziert wird, wenn eine Schwellentemperatur an der Lambdasonde, insbesondere am Sondenkörper der Lambdasonde erreicht wird. Durch ein Zurücksetzen oder Reduzieren des Wassermengenzählers wird der Tatsache Rechnung getragen, dass ab einer gewissen Schwellentemperatur der Dampfdruck des in der Lambdasonde vorliegenden Wassers derart hoch ist, dass das Wasser, insbesondere in Form von Wasserdampf, aus der Lambdasonde in den Abgaskanal ausgetrieben wird.

In einer weiteren Verbesserung des Verfahrens ist vorgesehen, dass die Schwellentemperatur an der Lambdasonde in einem Bereich von 160°C bis 220°C liegt. Besonders vorteilhaft hat sich hierbei ein Bereich von 175°C bis 190°C erwiesen, da hier zum einen ein hinreichend hoher Dampfdruck des Wasser vorherrscht, die Temperatur jedoch nicht so hoch ist, dass es zu einer vorzeitigen beziehungsweise beschleunigten Alterung der Lambdasonde kommt.

Besonders bevorzugt ist dabei, wenn der Wassermengenzähler nur dann reduziert wird, wenn die Schwellentemperatur mindestens für ein definiertes Zeitintervall überschritten wird. Um eine Temperatur an den Bereichen der Lambdasonde sicherzustellen, an denen sich das Wasser ansammelt, ist es vorteilhaft, wenn die Schwellentemperatur nicht nur erreicht wird, sondern für mindestens einen definierten Zeitraum erreicht oder überschritten wird. Dadurch wird sichergestellt, dass sich alle Komponenten der Lambdasonde soweit aufheizen, dass der zum Austreiben des Wassers aus der Lambdasonde notwendige Dampfdruck erreicht wird. Zudem ist das Volumen, welches durch die Dichtungen der Lambdasonde in den Abgaskanal gefördert werden kann, begrenzt, sodass zu einer wesentlichen oder vollständigen Austreibung des Wassers aus der Lambdasonde ein definierter Zeitraum notwendig ist.

Dabei ist mit weiterem Vorteil vorgesehen, dass die Reduzierung des Wertes des Wassermengenzählers in Abhängigkeit der Temperatur an der Lambdasonde erfolgt. Bei höherer Temperatur entstehen höhere Dampfdrücke in der Lambdasonde, sodass ein Austreiben von Wasser aus der Lambdasonde begünstigt wird. Durch eine temperaturabhängige Funktion zur Berechnung der aus der Lambdasonde an den Abgaskanal abgegebenen Wassermenge kann dies im Berechnungsmodell berücksichtigt werden, wodurch sich die Genauigkeit des Berechnungsmodells erhöht und die zusätzliche Heizleistung der Heizung der Lambdasonde früher als bei einer Berechnung ohne Einbeziehung der Temperatur erfolgen kann.

In einer weiteren Verbesserung des Verfahrens ist vorgesehen, dass die Heizleistung für die Lambdasonde durch eine Erhöhung der Spannung an der Lambdasonde erfolgt. Durch eine Erhöhung der Spannung kann bei näherungsweise gleichem elektrischen Widerstand der Lambdasonde eine schnellere Erwärmung erreicht werden. Somit kann auf einfache Art und Weise die Sondentemperatur auf eine Temperatur oberhalb der Schwellentemperatur zum Austreiben von Wasser aus dem Sondenkörper der Lambdasonde erhöht werden.

Weiterhin ist mit Vorteil vorgesehen, dass als zusätzliche Heizmaßnahme zur Erwärmung der Lambdasonde eine Verstellung des Zündwinkels des Verbrennungsmotors in Richtung "spät" erfolgt. Durch eine Zündwinkelverstellung in Richtung "spät" kann die Abgastemperatur des Verbrennungsmotors erhöht werden. Durch ein wärmeres Abgas des Verbrennungsmotors ist neben der Sondenheizung eine zusätzliche Erwärmung der Lambdasonde durch das Abgas möglich. Dieses Verfahren ist insbesondere geeignet, um eine Lambdasonde im Abgaskanal stromaufwärts des Drei-Wege-Katalysators über die Schwellentemperatur zu erwärmen.

Alternativ oder zusätzlich ist es möglich, die Temperatur an der Lambdasonde zu erhöhen, in dem mindestens ein erster Zylinder des Verbrennungsmotors, vorzugsweise eine erste Gruppe von Zylindern des Verbrennungsmotors, mit einem unterstöchiometrischen Verbrennungsluftverhältnis und mindestens ein zweiter Zylinder des Verbrennungsmotors, vorzugsweise eine zweite Gruppe von Zylindern des Verbrennungsmotors, mit einem überstöchiometrischen Verbrennungsluftverhältnis betrieben werden, sodass sich im Abgaskanal stromaufwärts des Drei-Wege-Katalysators ein stöchiometrisches Abgas einstellt, wobei die unverbrannten Bestandteile des Kraftstoffs aus dem Zylinders oder den Zylindern mit unterstöchiometrischem Verbrennungsluftverhältnis mit dem Restsauerstoff aus dem Zylinder oder den Zylindern mit überstöchiometrischem Verbrennungsluftverhältnis im Abgaskanal, insbesondere an der Oberfläche des Katalysators, exotherm umgesetzt werden. Auf diese Weise ist insbesondere eine Aufheizung einer Lambdasonde stromabwärts des Drei-Wege-Katalysators möglich.

Alternativ ist vorgesehen, dass der Verbrennungsmotor mit einem mageren, überstöchiometrischen Verbrennungsluftverhältnis betrieben wird und durch eine Nacheinspritzung Kraftstoff in der Brennraum eingebracht wird, welcher erst im Abgaskanal, insbesondere auf der Oberfläche des Katalysators umgesetzt wird. Auf diese Weise ist insbesondere eine Aufheizung einer Lambdasonde stromabwärts des Drei-Wege-Katalysators möglich.

Erfindungsgemäß wird ferner eine Lambdasonden-Anordnung zur Regelung eines Drei-Wege-Katalysators in einem Abgaskanal eines Verbrennungsmotors vorgeschlagen, welche mindestens eine Lambdasonde, welche im Abgaskanal zur Regelung des Drei-Wege-Katalysators angeordnet ist, sowie ein Steuergerät umfasst, wobei das Steuergerät einen maschinenlesbaren Programmcode aufweist, welcher dazu eingerichtet ist, ein erfindungsgemäßes Verfahren durchzuführen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einem Abgaskanal sowie einem im Abgaskanal angeordneten Drei-Wege-Katalysator, welcher über Lambdasonden regelbar ist, zur Durchführung eines erfindungsgemäßen Verfahrens;
- Figur 2: ein Ablaufdiagramm zum Wassereintrag in die Lambdasonde;
- Figur 3: ein Diagramm zur Ermittlung eines Gewichtungsfaktors in Abhängigkeit von der Temperatur, um den Wassereintrag in Abhängigkeit der Abgastemperatur während des Starts/ in der Warmlaufphase zu bewerten;
- Figur 4: ein Diagramm zum Wasseraustrag aus der Lambdasonde in Abhängigkeit von der Temperatur an der Sonde;
- Figur 5: ein Diagramm zur Reduzierung des Wassermengenzählers in Abhängigkeit von der Temperatur;
- Figur 6: einen tatsächlichen Temperaturverlauf an einem Sondenkörper einer Lambdasonde mit und ohne eine/r Erhöhung der Heizleistung durch das erfindungsgemäße Verfahren.

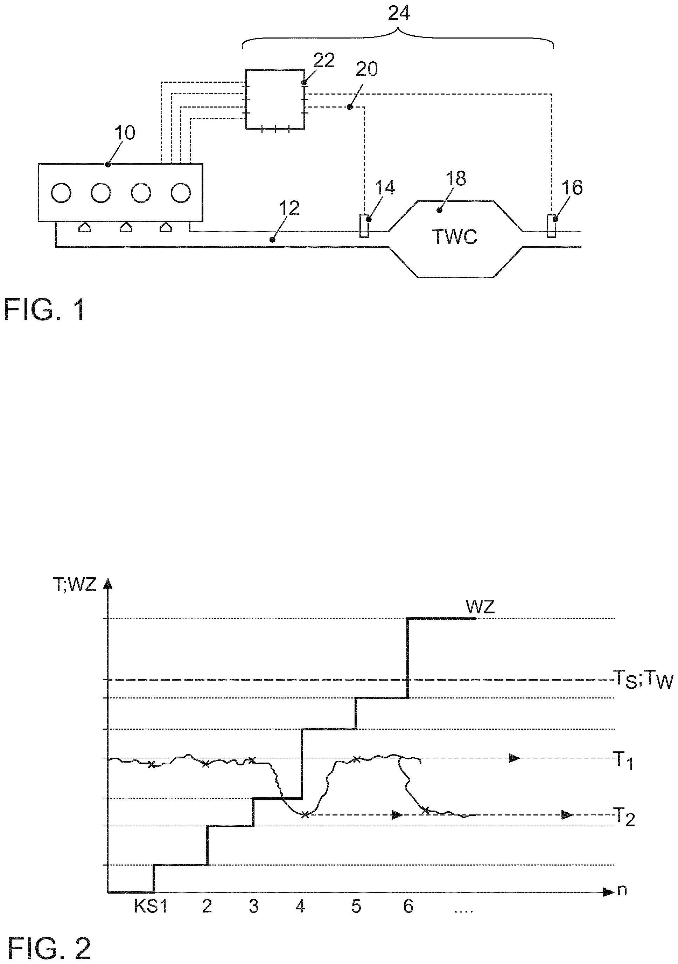

Figur 1 zeigt den einen Verbrennungsmotor 10 mit einem Abgaskanal 12. In dem Abgaskanal 12 ist ein Drei-Wege-Katalysator 18 zur Abgasnachbehandlung der Verbrennungsprodukte des Verbrennungsmotors 10 angeordnet. In Strömungsrichtung eines Abgases des Verbrennungsmotors 10 sind stromaufwärts des Drei-Wege-Katalysators 18 eine erste Lambdasonde 14 und stromabwärts des Drei-Wege-Katalysators 18 eine zweite Lambdasonde 16 angeordnet. Die Lambdasonden 14, 16 sind über Signalleitungen 20 mit einem Steuergerät 22 des Verbrennungsmotors 10 verbunden. Die Lambdasonden 14, 16 und das Steuergerät 22 bilden eine Lambdasonden-Anordnung 24, mit welcher ein erfindungsgemäßes Verfahren zur Ansteuerung der Lambdasonden 14, 16 ermöglicht werden kann. Die Lambdasonden 14, 16 ragen dabei in den Abgaskanal 12, sodass sie mit dem Abgas des Verbrennungsmotors 10 beaufschlagt werden. Da eine hermetische Abdichtung quasi unmöglich ist, kann unter bestimmten Rahmenbedingungen trotz Dichtelementen an den Lambdasonden 14, 16 eine Restmenge an Abgas in eine der Lambdasonden 14, 16 eindringen beziehungsweise aus der Lambdasonde in den Abgaskanal 12 gelangen. In dem Steuergerät 22 ist softwaretechnisch ein Wassermengen-Zähler WZ implementiert, mit dem die Wassermenge in den Lambdasonden 14, 16 ermittelt wird.

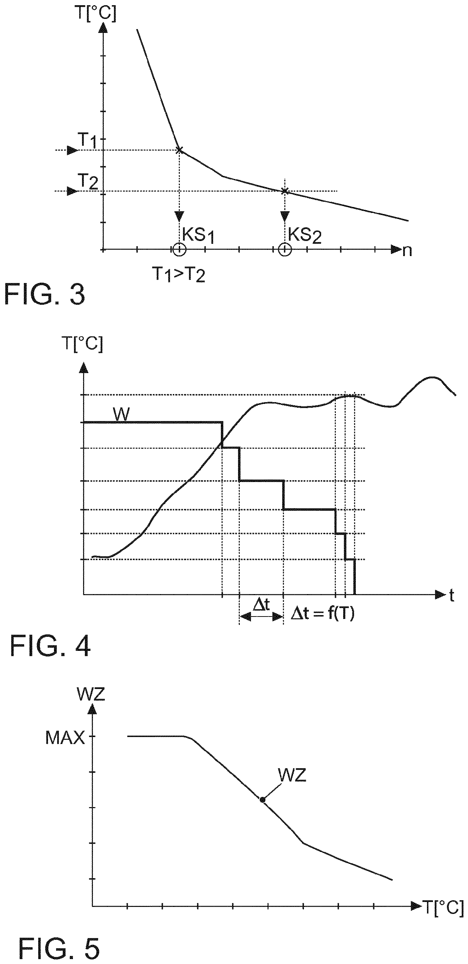

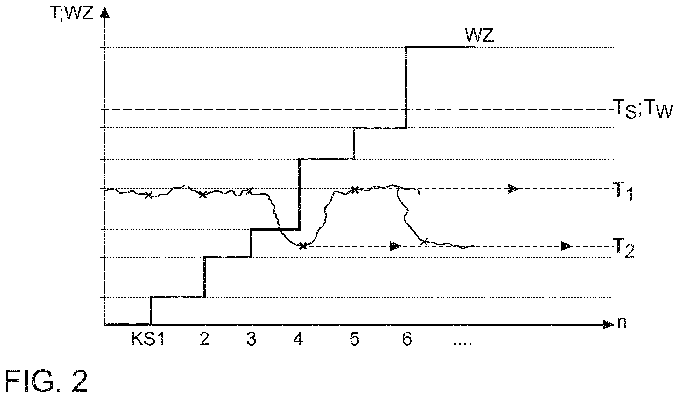

In den Figuren 2 bis 5 ist der Ablauf eines erfindungsgemäßen Verfahrens zum Betreiben einer Lambdasonden-Anordnung 24 an einem Abgaskanal 12 eines Verbrennungsmotors 10 dargestellt. In einem ersten Schritt des Verfahrens erfolgt mittels einer Software des Steuergeräts 22 eine Ermittlung der Wassermenge, die in die Lambdasonden strömt. Da die Lambdasonde 16 stromab des Drei-Wege-Katalysators 18 thermisch niedriger belastet ist, kann es insbesondere an dieser zweiten Lambdasonde 16 zu einem Eindringen von Wasser und/oder Wasserdampf kommen. Zur Ermittlung der Wassermenge ist ein physikalisches Integrationsmodell möglich, aber auch ein äquivalenter Faktor, welcher empirisch für verschiedene Starttemperaturen bei einem Kaltstart des Verbrennungsmotors 10 ermittelt wird. In Figur 2 ist die Aufsummierung der Wassermenge WZ über mehrere Kaltstartvorgänge n dargestellt, wenn zwischenzeitlich nicht eine Schwellentemperatur Ts erreicht wird, ab welcher der Dampfdruck in der Lambdasonde 14, 16 derart hoch ist, dass der Wasserdampf in den Abgaskanal 12 ausgetrieben wird. Entscheidende Einflüsse für die Wassermenge, die in die Lambdasonde 14, 16 eingetragen beziehungsweise ausgetragen wird, sind die Starttemperaturen sowie die Abgas- beziehungsweise Sondentemperaturen T_{L} der Lambdasonde 14, 16. Die Abhängigkeit der Wassermenge von der Starttemperatur bei zwei aufeinanderfolgenden Kaltstarts ist in Figur 3 dargestellt. Dabei erfolgt der erste Kaltstart bei einer Temperatur T₁ und der zweite Kaltstart bei einer Temperatur T₂, wobei die Temperatur T₁ größer als die Temperatur T₂ ist. In Figur 2 ist ferner zu erkennen, dass ab einer gewissen Anzahl n von Kaltstarts ohne zwischengeschaltete Regeneration der Wassermengenzähler WZ einen kritischen Schwellenwert T_{W} erreicht, ab dem zusätzlich Maßnahmen zum Austreiben von Wasser aus der Lambdasonde 14, 16 notwendig sind.

In Figur 4 ist eine Reduzierung des Wassermengen-Zählers WZ in Abhängigkeit der Temperatur T_{L} an der Lambdasonde 14, 16 sowie der Zeit t dargestellt. Erreicht die Temperatur T_{L} an der Lambdasonde 14, 16 für ein definiertes Zeitintervall Δt eine Temperatur oberhalb der Schwellentemperatur Ts, strömt Wasser in Form von Wasserdampf zurück in das Abgas des Verbrennungsmotors 10. Die aus der Lambdasonde 14, 16 ausgetriebene Wassermenge wird in einem zweiten Verfahrensschritt ebenfalls über ein physikalisches Gleichgewicht oder äquivalent bestimmt. In einem dritten Verfahrensschritt wird die Wassermenge bilanziert, sodass anschließend in einem vierten Schritt ein Abgleich der in der Lambdasonde 14, 16 befindlichen Wassermenge mit einer maximal zulässigen, kritischen Wassermenge in der Lambdasonde 14, 16 vollzogen werden kann. Ist diese kritische Wassermenge überschritten, was durch einen Schwellenwert Tw des Wassermengen-Zählers erkannt werden kann, wird die Heizungsregelung für eine Sondenheizung der Lambdasonde 14, 16 auf einen höheren Sollwert eingestellt. Die Dauer und die Höhe dieser Sollwerterhöhung der Heizungsregelung sind abhängig von der Alterung, der maximal zulässigen Bauteiltemperatur und vom Diffusionsverhalten der Lambdasonde 14, 16. Entscheidend für einen Wasseraustrag aus der Lambdasonde 14, 16 ist wie in Figur 5 dargestellt die Temperatur T_{L} im Kontaktierungsbereich zwischen dem Sondenkörper der Lambdasonde 14, 16 und der Signalleitung 20. In Abhängigkeit der Temperatur oberhalb der Schwellentemperatur Ts wird das Bilanzmodell unterschiedlich schnell angepasst bzw. der äquivalente Faktor unterschiedlich schnell reduziert.

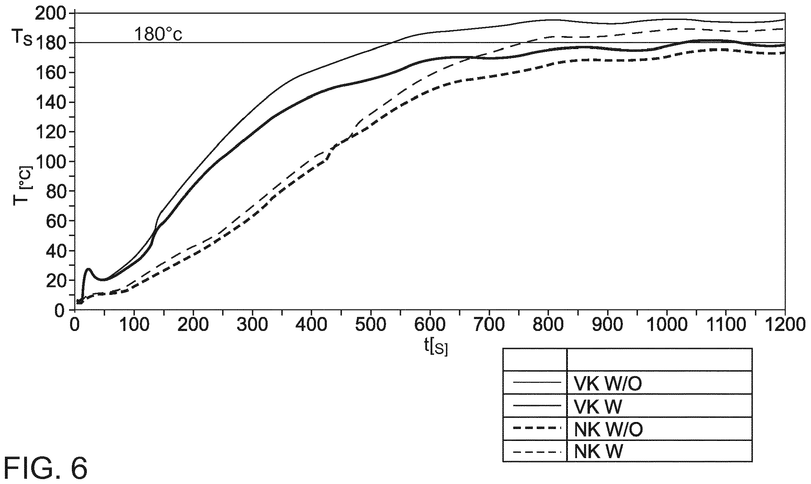

In Figur 6 ist anhand einer Messung dargestellt, dass die erste Lambdasonde 14 sowie die zweite Lambdasonde 16 durch das erfindungsgemäße Verfahren schneller auf eine Temperatur oberhalb der Schwellentemperatur Ts gebracht werden. Dabei zeigt sich insbesondere an der zweiten Lambdasonde 16, dass bei dem dargestellten Betriebszyklus des Verbrennungsmotors 10 die Lambdasonden 14, 16 ohne eine Erhöhung der Heizleistung nicht auf eine Temperatur oberhalb der Temperatur am Schwellenwert Ts gebracht werden können. Dabei ist die Temperatur der ersten Lambdasonde 14 mit oder ohne zusätzliche Heizmaßnahmen stets höher als die Temperatur an der zweiten Lambdasonde 16. Daher kann es sinnvoll sein, bei einem erfindungsgemäßen Verfahren ausschließlich die Heizleistung an der zweiten Lambdasonde 16 stromab des Drei-Wege-Katalysators 18 zu erhöhen.

### Bezugszeichenliste

- 10: Verbrennungsmotor
- 12: Abgaskanal
- 14: (erste) Lambdasonde
- 16: (zweite) Lambdasonde
- 18: Drei-Wege-Katalysator
- 20: Signalleitung
- 22: Steuergerät
- 24: Lambdasonden-Anordnung
- k: Gewichtungsfakor
- KS: Kaltstart
- n: Anzahl der Kaltstarts
- T: Temperatur
- T_{L}: Temperatur Lambdasonde
- Ts: Schwellenwert-Temperatur
- Tw: Schwellenwert Wassermenge
- WZ: Wassermengen-Zähler
- Δt: Zeitintervall

## Patentansprüche

1. Verfahren zum Betreiben einer Lambdasonden-Anordnung (24) an einem Abgaskanal (12) eines Verbrennungsmotors (10), umfassend folgende Schritte:
- Ermitteln eines Wassereintrags in eine im Abgaskanal (12) eines Verbrennungsmotors (10) angeordnete Lambdasonde (14, 16),
- Ermitteln einer Wassermenge, welche von der Lambdasonde (14, 16) an das Abgas im Abgaskanal (12) abgegeben wird,
- Bilanzierung der Wassermenge, welche in der Lambdasonde (14, 16) verbleibt, und
- Abgleich der in der Lambdasonde (14, 16) vorhandenen Wassermenge mit einem maximal zulässigen Schwellenwert (Tw), wobei bei Überschreiten des maximal zulässigen Schwellenwertes (Tw) die Heizleistung für die Lambdasonde (14, 16) erhöht wird, um das Wasser aus der Lambdasonde (14, 16) auszutreiben.

2. Verfahren nach Anspruch 1, **dadurch gekennzeichnet, dass** ein Wassermengenzähler (WZ) vorgesehen ist, welcher den Wassereintrag in die Lambdasonde (14, 16) über mehrere Startvorgänge des Verbrennungsmotors (10) aufsummiert, falls eine Schwellentemperatur (Ts) zur Aktivierung eines Wasseraustrags aus der Lambdasonde (14, 16) nicht erreicht wird.

3. Verfahren nach Anspruch 2, **dadurch gekennzeichnet, dass** die Startvorgänge in Abhängigkeit von einer ermittelten Umgebungstemperatur (T) mit einem Gewichtungsfaktor (k) multipliziert werden.

4. Verfahren nach Anspruch 2 oder 3, **dadurch gekennzeichnet, dass** der Wert des Wassermengenzählers (WZ) zurückgesetzt oder reduziert wird, wenn eine Schwellentemperatur (Ts) an der Lambdasonde (14, 16) erreicht wird.

5. Verfahren nach Anspruch 4, **dadurch gekennzeichnet, dass** der Wassermengenzähler (WZ) nur dann reduziert wird, wenn die Schwellentemperatur (Ts) für mindestens ein definiertes Zeitintervall (Δt) überschritten wird.

6. Verfahren nach Anspruch 5, **dadurch gekennzeichnet, dass** die Reduzierung des Wassermengenzählers (WZ) in Abhängigkeit der Temperatur (TL) an der Lambdasonde erfolgt.

7. Verfahren nach einem der Ansprüche 1 bis 6, **dadurch gekennzeichnet, dass** die Heizleistung für die Lambdasonde (14, 16) durch ein Erhöhung der Spannung (ΔU) an der Lambdasonde (14, 16) erfolgt.

8. Verfahren nach einem der Ansprüche 1 bis 7, **dadurch gekennzeichnet, dass** als zusätzliche Heizmaßnahme eine Verstellung des Zündwinkels des Verbrennungsmotors (10) in Richtung "spät" erfolgt.

9. Verfahren nach einem der Ansprüche 1 bis 8, **dadurch gekennzeichnet, dass** als zusätzliche Heißmaßnahme ein erster Zylinder oder eine erste Gruppe von Zylinders des Verbrennungsmotors (10) mit einem unterstöchiometrischen Verbrennungsluftverhältnis (λ < 1) und ein zweiter Zylinder oder eine zweite Gruppe von Zylindern mit einem überstöchiometrischen Verbrennungsluftverhältnis (λ > 1) betrieben werden, wobei sich im Abgaskanal (12) stromaufwärts des Drei-Wege-Katalysators (18) ein stöchiometrisches Abgas einstellt, oder
der Verbrennungsmotor (10) mit einem mageren, überstöchiometrischen Verbrennungsluftverhältnis (λ > 1) betrieben wird und durch eine Nacheinspritzung in zumindest einen der Zylinder des Verbrennungsmotors (10) so viel Kraftstoff eindosiert wird, dass sich im Abgaskanal (12) stromaufwärts des Drei-Wege-Katalysators (18) ein stöchiometrisches Abgas einstellt.

10. Lambdasonden-Anordnung (24) zur Regelung eines Drei-Wege-Katalysators (18) in einem Abgaskanal (12) eines Verbrennungsmotors (10), umfassend mindestens eine Lambdasonde (14, 16), welche im Abgaskanal (12) zur Regelung des Drei-Wege-Katalysators (18) angeordnet ist, sowie ein Steuergerät (22) mit einem maschinenlesbaren Programmcode, welcher dazu eingerichtet ist, ein Verfahren nach einem der Ansprüche 1 bis 9 durchzuführen.

## Claims

1. Method for operating a lambda probe assembly (24) on an exhaust gas duct (12) of an internal combustion engine (10), comprising the following steps:
- determining a water intake in a lambda probe (14, 16) arranged in the exhaust gas duct (12) of an internal combustion engine (10),
- determining a quantity of water which is discharged by the lambda probe (14, 16) to the exhaust gas in the exhaust gas duct (12),
- balancing the quantity of water remaining in the lambda probe (14, 16), and
- comparison of the quantity of water present in the lambda probe (14, 16) with a maximum allowable threshold (Tw), wherein, if the maximum allowable threshold (Tw) is exceeded, the heating power for the lambda probe (14, 16) is increased to expel the water from the lambda probe (14, 16).

2. Method according to claim 1, **characterized in that** a water quantity meter (WZ) is provided which sums up the water intake into the lambda probe (14, 16) over a plurality of starting operations of the internal combustion engine (10), in the event that a threshold temperature (Ts) for activating a water discharge from the lambda probe (14, 16) is not reached.

3. Method according to claim 2, **characterized in that** the starting operations are multiplied by a weighting factor (k) as a function of a determined ambient temperature (T).

4. Method according to claim 2 or 3, **characterized in that** the value of the water quantity meter (WZ) is reset or reduced when a threshold temperature (Ts) is reached at the lambda probe (14, 16).

5. Method according to claim 4, **characterized in that** the water quality meter (WZ) is only reduced when the threshold temperature (Ts) is exceeded for at least a defined time interval (Δt).

6. Method according to claim 5, **characterized in that** the reduction of the water quantity meter (WZ) takes place at the lambda probe as a function of the temperature (T_{L}).

7. Method according to any one of claims 1 to 6, **characterized in that** the heating power for the lambda probe (14, 16) is effected by increasing the voltage (ΔU) at the lambda probe (14, 16).

8. Method according to any one of claims 1 to 7, **characterized in that** an adjustment of the ignition angle of the internal combustion engine (10) in the "late" direction is effected as an additional heating measure.

9. Method according to any one of claims 1 to 8, **characterized in that**, as an additional heating measure, a first cylinder or a first group of cylinders of the internal combustion engine (10) are operated with a substoichiometric combustion air ratio (λ < 1), while a second cylinder or a second group of cylinders are operated with a superstoichiometric combustion air ratio (λ > 1), wherein a stoichiometric exhaust gas is adjusted in the exhaust passage (12) upstream of the three-way catalyst (18), or the internal combustion engine (10) is operated with a lean superstoichiometric combustion air ratio (λ > 1), wherein so much fuel is metered into at least one of the cylinders of the internal combustion engine (10) through post-injection, that the stoichiometric exhaust gas is adjusted in the exhaust duct (12) upstream of the three-way catalyst (18).

10. Lambda probe addembly (24) for controlling a three-way catalyst (18) in an exhaust duct (12) of an internal combustion engine (10), comprising at least one lambda probe (14, 16), which is arranged in the exhaust duct (12) to control the 3-way catalyst (18), and a control device (22) with a machine-readable program code, which is designed to implement a method according to one of claims 1 to 9.

## Revendications

1. Procédé de fonctionnement d'un ensemble de sonde lambda (24) sur un conduit de gaz d'échappement (12) d'un moteur à combustion interne (10), comprenant les étapes suivantes :
- détermination d'une entrée d'eau dans une sonde lambda (14, 16) disposée dans le conduit de gaz d'échappement (12) d'un moteur à combustion interne (10),
- détermination d'une quantité d'eau qui est délivrée par la sonde lambda (14, 16) aux gaz d'échappement dans le conduit de gaz d'échappement (12),
- établissement du bilan de la quantité d'eau qui demeure dans la sonde lambda (14, 16), et
- comparaison de la quantité d'eau présente dans la sonde lambda (14, 16) avec une valeur de seuil (Tw) admissible au maximum, la puissance de chauffe pour la sonde lambda (14, 16) étant augmentée en cas de dépassement de la valeur de seuil (Tw) admissible au maximum pour expulser l'eau hors de la sonde lambda (14, 16).

2. Procédé selon la revendication 1, **caractérisé en ce qu'**il est prévu un compteur de quantité d'eau (WZ) qui additionne l'entrée d'eau dans la sonde lambda (14, 16) sur plusieurs processus de démarrage du moteur à combustion interne (10) si une température de seuil (Ts) pour l'activation d'une sortie d'eau hors de la sonde lambda (14, 16) n'est pas atteinte.

3. Procédé selon la revendication 2, **caractérisé en ce que** les processus de démarrage sont multipliés par un facteur de pondération (k) en fonction d'une température ambiante (T) déterminée.

4. Procédé selon la revendication 2 ou 3, **caractérisé en ce que** la valeur du compteur de quantité d'eau (WZ) est réinitialisée ou réduite quand une température de seuil (Ts) est atteinte sur la sonde lambda (14, 16).

5. Procédé selon la revendication 4, **caractérisé en ce que** le compteur de quantité d'eau (WZ) n'est réduit que quand la température de seuil (Ts) est dépassée pendant au moins un intervalle de temps (Δt) défini.

6. Procédé selon la revendication 5, **caractérisé en ce que** la réduction du compteur de quantité d'eau (WZ) s'effectue en fonction de la température (T_{L}) sur la sonde lambda.

7. Procédé selon l'une des revendications 1 à 6, **caractérisé en ce que** la puissance de chauffe pour la sonde lambda (14, 16) s'effectue par une augmentation de la tension (ΔU) sur la sonde lambda (14, 16).

8. Procédé selon l'une des revendications 1 à 7, **caractérisé en ce qu'**un déplacement de l'angle d'allumage du moteur à combustion interne (10) dans le sens « retard » est effectué en tant que mesure de chauffe supplémentaire.

9. Procédé selon l'une des revendications 1 à 8, **caractérisé en ce que**, en tant que mesure de chauffe supplémentaire, un premier cylindre ou un premier groupe de cylindres du moteur à combustion interne (10) est mis en oeuvre avec un rapport d'air de combustion (λ < 1) sous-stoechiométrique, et un deuxième cylindre ou un deuxième groupe de cylindres est mis en oeuvre avec un rapport d'air de combustion (À > 1) sur-stoechiométrique, des gaz d'échappement stoechiométriques s'installant dans le conduit de gaz d'échappement (12) en amont du catalyseur trois voies (18), ou le moteur à combustion interne (10) étant mis en oeuvre avec un rapport d'air de combustion (À > 1) sur-stoechiométrique pauvre et, par une injection ultérieure dans au moins un des cylindres du moteur à combustion interne (10), du carburant étant dosé en quantité suffisante pour que des gaz d'échappement stoechiométriques s'installent dans le conduit de gaz d'échappement (12) en amont du catalyseur trois voies (18).

10. Ensemble de sonde lambda (24) destiné à la régulation d'un catalyseur trois voies (18) dans un conduit de gaz d'échappement (12) d'un moteur à combustion interne (10), comprenant au moins une sonde lambda (14, 16) qui est disposée dans le conduit de gaz d'échappement (12) pour la régulation du catalyseur trois voies (18), ainsi qu'un appareil de commande (22) avec un code programme lisible par machine qui est agencé pour réaliser un procédé selon l'une des revendications 1 à 9.
